# FASCICULE DE BREVET EUROPEEN

(11) **EP 1 352 789 B1**
(45) Date de publication et mention de la délivrance du brevet: **01.10.2008**
(21) Numéro de dépôt: 03290773.5
(22) Date de dépôt: 27.03.2003
(51) Int. Cl.: B60R 19/34

(54) **Bouclier pare-chocs pour un véhicule automobile comportant un point de fixation destructible**
Stossstangenabdeckung für Kraftfahrzeug mit als Sollbruchstelle ausgebildeter Befestigung
Bumper cover for a motor vehicle including a breakaway mounting

(30) Priorité: 11.04.2002 FR 0204531
(43) Date de publication de la demande: 15.10.2003
(73) Titulaire: RENAULT S.A.S., 92100 Boulogne Billancourt (FR)
(72) Inventeur: Audry, Clarisse, 92160 Antony (FR); Demarque, Jean-Pierre, 92410 Ville d'Avray (FR); Petra, Jean-Marc, 91140 Villebon s/Yvette (FR); Saillard, Patrick, 75018 Paris (FR)

(56) Documents cités:
- EP-A- 0 970 879
- EP-A- 1 038 732
- DE-A- 19 802 841

## Description

L'invention concerne un véhicule automobile.

L'invention concerne plus particulièrement un véhicule automobile comportant une partie d'extrémité comportant un élément de structure de caisse du véhicule, et un bouclier pare-chocs dont une extrémité inférieure est fixée à l'élément de structure de caisse.

On connaît de nombreux exemples de véhicules automobiles de ce type.

Dans de tels véhicules, de tels boucliers doivent satisfaire des exigences croissantes en terme de sécurité passive, qui s'ajoutent aux exigences aérodynamiques.

Ils doivent notamment répondre à des caractéristiques spécifiques de résistance lors de deux types différents de simulations de chocs, notamment une simulation de choc dit "piéton" et une simulation de choc dit "de Danner".

Le choc dit "piéton" correspond à un choc selon lequel le bouclier vient percuter la jambe d'un piéton, sensiblement entre le genou et la cheville, en demeurant suffisamment rigide pour éviter que le bouclier ne se déforme et que la jambe dudit piéton ne glisse sous le véhicule.

Le choc dit "Danner", ou choc équivalent, correspond à un choc à basse vitesse avec un autre véhicule, et est simulé par la percussion du véhicule lancé à 16 km/h dans un mur, avec 40% de recouvrement. Au cours de ce choc, l'extrémité inférieure du bouclier doit se déformer suffisamment afin de ne pas transmettre d'efforts à l'élément de structure de caisse du véhicule, et éviter la déformation dudit élément de structure de caisse, dans le but de limiter les coûts de réparation.

Pour satisfaire à ces caractéristiques de manière simple et efficace, l'invention propose un véhicule automobile du type du type décrit précédemment, dont le bouclier pare-chocs est susceptible de résister à un choc de faible intensité, de se rompre partiellement lorsqu'il est soumis à un choc d'intensité supérieure, et de se compacter dans un faible encombrement.

Dans ce but, l'invention propose un véhicule automobile du type décrit précédemment, caractérisé en ce que l'élément de structure de caisse comporte au moins un élément sensiblement vertical sous lequel est fixé au moins une traverse sensiblement transversale et horizontale, et en ce que l'extrémité inférieure du bouclier comporte, pour sa fixation à l'élément de structure de caisse, un déflecteur qui est fixé au moins sous la traverse par l'intermédiaire d'un point de fixation destructible qui est susceptible de se rompre pour une valeur déterminée d'un effort de choc.

Selon d'autres caractéristiques de l'invention :
- le déflecteur comporte au moins un corps transversal, qui est réuni à une plaque, destinée à recevoir le point de fixation destructible, par l'intermédiaire d'une surface inclinée qui est destinée, en cas de choc, à glisser sous la traverse pour permettre la rupture du point de fixation destructible,
- le déflecteur repose sur une face verticale de l'élément vertical par l'intermédiaire d'au moins un bras d'appui incliné qui comporte une zone de déformation,
- la zone de déformation du bras est agencée sensiblement à proximité de la jonction du corps et du bras,
- la zone de déformation comporte, à la jonction du corps et du bras, une encoche sensiblement horizontale tournée vers l'élément vertical, qui est destinée à provoquer le début de la déformation au voisinage de ladite encoche,
- la zone de déformation est une zone d'amorce de rupture qui est destinée à permettre la rupture du bras à sa jonction avec le corps à partir de l'encoche,
- la zone de déformation est une zone de pliage qui est destinée à permettre un repli plastique du bras sensiblement en rotation autour d'un axe transversal passant par le centre de l'encoche,
- l'élément vertical de l'élément de structure de caisse comporte une équerre de butée, qui fait saillie à partir de sa face verticale, et qui est agencée au dessus d'une extrémité d'appui du bras, pour permettre une reprise des efforts exercés par le bras sur l'élément vertical afin de favoriser sa déformation,
- le point de fixation destructible est constitué d'un pion fusible sensiblement vertical qui traverse la plaque du déflecteur et qui est reçu dans la traverse.

D'autres caractéristiques et avantages de l'invention apparaîtront à la lecture de la description détaillée qui suit pour la compréhension de laquelle on se reportera aux dessins annexés dans lesquels :
- la figure 1 est une vue schématique en coupe longitudinale d'une partie avant d'un véhicule automobile comportant un bouclier pare-chocs selon l'invention soumis à un choc de type "piéton" ;
- la figure 2 d'une partie avant d'un véhicule automobile comportant bouclier pare-chocs selon l'invention soumis à un choc de type "Danner" ;
- la figure 3 est une vue schématique en coupe longitudinale d'un premier mode de réalisation d'un déflecteur selon l'invention représenté dans sa position de repos ;
- la figure 4 est une vue schématique en coupe longitudinale d'un deuxième mode de réalisation d'un déflecteur selon l'invention représenté dans sa position de repos ;
- la figure 5 est une vue schématique en coupe longitudinale d'un troisième mode de réalisation d'un déflecteur selon l'invention représenté dans sa position de repos ; et
- la figure 6 est une vue du déflecteur de la figure 5 représenté dans sa position de déformation suite à un choc de type "Danner".

Dans la description qui va suivre, des chiffres de référence identiques désignent des pièces identiques ou ayant des fonctions similaires.

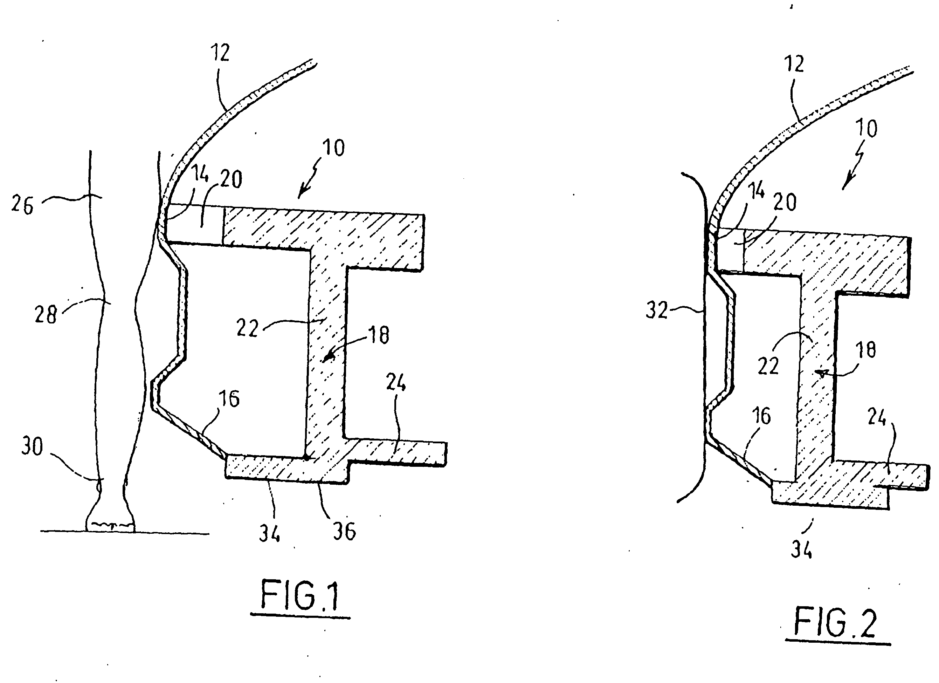

Conformément à l'invention, on a représenté aux figures 1 et 2 une partie d'extrémité 10 d'un véhicule automobile, par exemple une partie 10 avant, qui comporte un bouclier pare-chocs 12, agencé devant un élément 18 de structure de caisse, dont une extrémité inférieure 16 est fixée sous l'élément 18 de structure de caisse du véhicule par l'intermédiaire d'un déflecteur 34.

De manière connue, une partie intermédiaire 14 du bouclier 12 est agencée sensiblement devant l'élément 18 de structure de caisse. L'élément 18 de structure de caisse comporte derrière le bouclier 12 une partie 20 supérieure qui est susceptible de se déformer en s'écrasant sensiblement longitudinalement lorsqu'elle est soumise à un choc d'une intensité supérieure à une intensité déterminée, analogue au choc simulé dit "Danner" qui a été représenté en illustration à la figure 2.

La partie 20 de l'élément 18 de structure de caisse peut par exemple être constituée d'un élément démontable rigide, boulonné sur la structure de caisse, qui peut être facilement échangé lorsqu'il a été déformé suite à un choc. Cet élément ne faisant pas l'objet de la présente invention, il ne sera pas décrit plus explicitement dans la présente description.

De manière connue, le bouclier 12 peut, à basse vitesse, être soumis, entre autres, à deux types de chocs différents.

Un premier type de choc correspond à un choc simulé dit "choc piéton", comme représenté à la figure 1.

Le choc dit "piéton" correspond à un choc selon lequel le bouclier 12 vient percuter un élément 26 simulant la jambe d'un piéton, sensiblement entre le genou 28 et la cheville 30, en demeurant suffisamment rigide pour éviter que la jambe 26 dudit piéton ne glisse sous le véhicule.

Un second type de choc correspond à un choc simulé dit "choc Danner", comme représenté à la figure 2.

Le choc dit "Danner" correspond à un choc à basse vitesse avec un autre véhicule, et est simulé par la percussion du bouclier contre un mur 32, le véhicule étant lancé à une vitesse d'environ 16 km/h. Au cours de ce choc, le déflecteur 34 ne doit pas transmettre d'efforts trop importants à l'élément de structure 18 de caisse du véhicule, afin d'éviter la déformation dudit élément et de minimiser ainsi les coûts de réparation.

Pour satisfaire à ces exigences de manière simple et efficace, l'élément 18 de structure de caisse comporte, conformément à l'invention, au moins un élément 22 sensiblement vertical sous lequel est fixé au moins une traverse 24 sensiblement transversale et horizontale, et le déflecteur 34 est fixé au moins sous la traverse 24 par l'intermédiaire d'un point 36 de fixation qui est susceptible de se rompre pour une valeur déterminée d'un effort de choc.

En particulier, le point 36 de fixation résiste à un choc du type "choc piéton" tel qu'illustré à la figure 1, et il est détruit lorsque le bouclier 12 est soumis à un choc du type "choc Danner" tel qu'illustré à la figure 2.

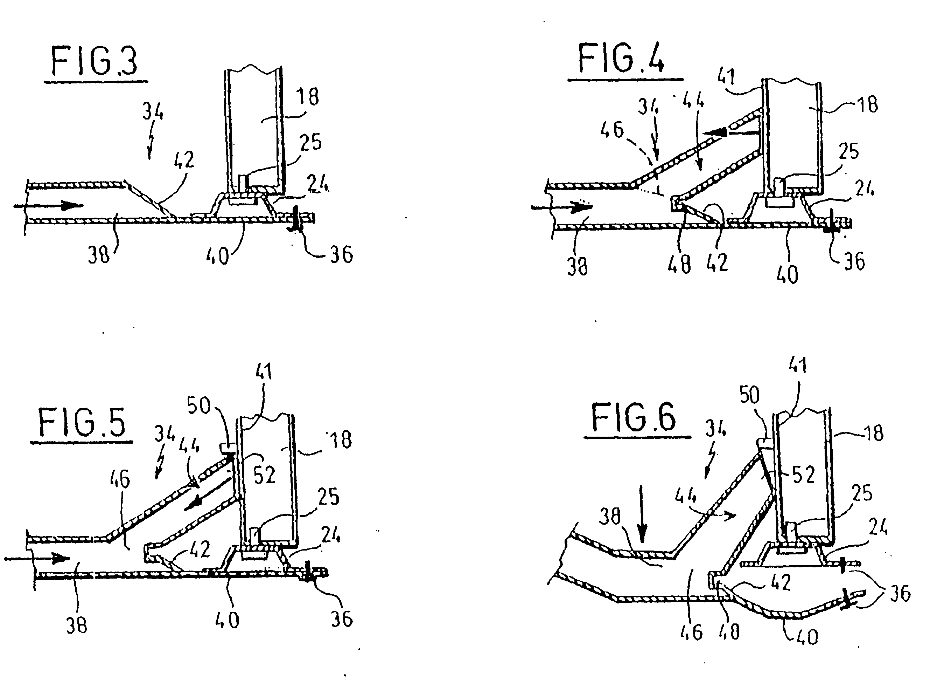

Trois modes de réalisation du déflecteur 34 ont été représenté sur les figures 3 à 6.

Dans tous les modes de réalisation de l'invention, le déflecteur 34 comporte au moins un corps 38 transversal. Ce corps 38 transversal est réuni à une plaque 40, qui est destinée à recevoir le point 36 de fixation destructible, par l'intermédiaire d'une surface inclinée 42 qui est destinée, en cas de choc, à glisser sous la traverse 24 pour permettre la rupture du point 36 de fixation destructible.

La traverse 24 est fixée rigidement sous l'élément vertical 22, par exemple par l'intermédiaire d'au moins un boulon 25.

Le point 36 de fixation destructible peut être par exemple constitué d'un pion fusible sensiblement vertical qui traverse la plaque 40 du déflecteur 34 et qui est reçu dans la traverse 24. En variante, le point 36 de fixation destructible peut être constitué d'un pion rigide qui traverse des zones de fragilité de la plaque 40 du déflecteur 34, réalisées par exemple sous la forme de cavités qui sont réalisées dans l'épaisseur de la plaque 40

Dans le premier mode de réalisation de l'invention qui a été représenté à la figure 3, le déflecteur 34 n'est lié à l'élément 18 de structure de caisse que par l'intermédiaire du point de fixation 36 qui est fixé sous la traverse 24.

Dans cette configuration, le point 36 de fixation destructible est susceptible, dans un cas de choc analogue au choc "piéton" de la figure 1, de demeurer suffisamment rigide pour ne pas se rompre et pour que le déflecteur 34 demeure rigide. De ce fait, le bouclier 12 demeure rigide lui aussi, et il permet d'éviter qu'un piéton ne glisse sous le véhicule.

Dans un cas de choc analogue au choc "Danner " tel que représenté à la figure 2, le point 36 de fixation destructible est susceptible de se rompre pour que la surface 42 inclinée du déflecteur 34 intermédiaire glisse partiellement sous la traverse 24. De ce fait, le déflecteur 34 ne transmet pas d'énergie à l'élément 18 de structure de caisse empêchant ainsi la détérioration dudit élément 18 de structure de caisse.

Dans les deuxième et troisième modes de réalisation de l'invention qui ont été représentés sur les figures 4 à 6, le déflecteur 34 repose au contact d'une face verticale 41 de l'élément 22 vertical par l'intermédiaire d'au moins un bras 44 d'appui incliné qui comporte une zone 46 de déformation.

De préférence, la zone 46 de déformation du bras 44 est agencée sensiblement à proximité de la jonction du corps 38 et du bras 44 du déflecteur 34.

Avantageusement, la zone 46 de déformation comporte, à la jonction du corps 38 et du bras 44, une encoche 48 sensiblement horizontale tournée vers l'élément vertical 22, qui est destinée à provoquer le début de la déformation au voisinage de ladite encoche 48.

Par ailleurs, dans le deuxième mode de réalisation de l'invention qui a été représenté à la figure 4, la zone 46 de déformation est une zone d'amorce de rupture qui est destinée à permettre la rupture du bras 44 à sa jonction avec le corps 38 à partir de l'encoche 48, sensiblement suivant les traits pointillés qui ont été figurés sur la figure 4.

De cette manière, dans un cas de choc analogue au choc "piéton" de la figure 1, le point de fixation 36 destructible et le bras 44 sont susceptibles de ne pas se rompre. De cette manière, le déflecteur 34 demeure rigide, et par voie de conséquence le déflecteur 12 demeure rigide lui aussi, évitant qu'un piéton ne glisse sous le véhicule.

Dans un cas de choc analogue au choc "Danner " de la figure 2, le bras 44, en appui sur l'élément vertical 22, se rompt sensiblement suivant les pointillés, puis le point de fixation 36 destructible se rompt pour que la surface inclinée du déflecteur 34 glisse partiellement sous la traverse 24. De cette manière le déflecteur 34 ne transmet pas d'énergie à l'élément 18 de structure et permet de ne pas détériorer ledit élément 18 de structure de caisse.

Dans le troisième mode de réalisation qui a été représenté à la figure 5, la zone de déformation est, en variante, une zone 46 de pliage qui est destinée à permettre un repli plastique du bras 44 sensiblement en rotation d'un axe transversal passant par le centre de l'encoche 48.

Avantageusement, l'élément 22 vertical de l'élément 18 de structure de caisse comporte une équerre 50 de butée, qui fait saillie à partir de sa face verticale 41, et qui est agencée au dessus d'une extrémité 52 d'appui du bras, pour permettre une reprise des efforts exercés par le bras 44 sur l'élément 22 vertical afin de favoriser sa déformation.

De cette manière, dans un cas de choc analogue au choc "piéton" de la figure 1, le point de fixation 36 destructible est susceptible de ne pas se rompre et le bras 44, en appui sur l'élément 22 vertical, demeure rigide. De ce fait le déflecteur 34 demeure rigide, ne transmettant que des efforts limités à l'élément 18 de structure de caisse. Le bouclier 12 demeure donc lui aussi rigide. Cette configuration évite qu'un piéton ne glisse sous le véhicule.

En revanche, pour un choc d'intensité plus élevée analogue au choc "Danner " de la figure 2, l'équerre 50 assurant toujours la reprise des efforts du bras 44 sur l'élément vertical 22, le bras 44 se plie sensiblement autour d'un axe transversal passant par le centre de l'encoche 48, et autorise ainsi une mobilité du corps 38.

L'effort engendré par le bras 44 sur le corps 38 et la plaque 40 du déflecteur 34 permettent de maintenir la déformation dudit déflecteur 34 et d'exercer des efforts verticaux sur le point de fixation 36. Cette cinématique facilite la rupture du point de fixation 36 et le compactage du déflecteur 34.

De ce fait, le point de fixation 36 destructible est à même de se rompre et la surface inclinée 42 du déflecteur 34 peut glisser partiellement sous la traverse 24.

De ce fait, le déflecteur 34 absorbe une partie de l'énergie cinétique du choc, tant par déformation du bras 44 que par la rupture du point de fixation destructible 36, limitant ainsi la détérioration de l'élément 18 de structure de caisse.

L'invention permet donc de proposer un véhicule automobile comportant un bouclier pare-chocs, adaptable à l'avant ou à l'arrière dudit véhicule automobile, qui présente un haut niveau de sécurité passive et qui est à même de préserver la structure de caisse du véhicule en cas de choc avec un autre véhicule à vitesse réduite.

## Revendications

1. Véhicule automobile comportant une partie (10) d'extrémité comportant un élément (18) de structure de caisse du véhicule, et un bouclier (12) pare-chocs dont une extrémité inférieure (16) est fixée à l'élément (18) de structure de caisse, **caractérisé en ce que** l'élément (18) de structure de caisse comporte au moins un élément (22) sensiblement vertical sous lequel est fixé au moins une traverse (24) sensiblement transversale et horizontale, et **en ce que** l'extrémité (16) inférieure du bouclier (12) comporte, pour sa fixation à l'élément (18) de structure de caisse, un déflecteur (34) qui est fixé au moins sous la traverse (24) par l'intermédiaire d'un point (36) de fixation destructible qui est susceptible de se rompre pour une valeur déterminée d'un effort de choc.

2. Véhicule automobile selon la revendication précédente, **caractérisé en ce que** le déflecteur (34) comporte au moins un corps (38) transversal, qui est réuni à une plaque (40), destinée à recevoir le point de fixation destructible (36), par l'intermédiaire d'une surface (42) inclinée qui est destinée, en cas de choc, à glisser sous la traverse (24) pour permettre la rupture du point (36) de fixation destructible.

3. Véhicule automobile selon la revendication précédente, **caractérisé en ce que** le déflecteur (34) repose sur une face (41) verticale de l'élément (22) vertical par l'intermédiaire d'au moins un bras (44) d'appui incliné qui comporte une zone (46) de déformation.

4. Véhicule automobile selon la revendication précédente, **caractérisé en ce que** la zone (46) de déformation du bras (44) est agencée sensiblement à proximité de la jonction du corps (38) et du bras (44).

5. Véhicule automobile selon la revendication précédente, **caractérisé en ce que** la zone (46) de déformation comporte, à la jonction du corps (38) et du bras (44), une encoche (48) sensiblement horizontale tournée vers l'élément (22) vertical, qui est destinée à provoquer le début de la déformation au voisinage de ladite encoche (48).

6. Véhicule automobile selon la revendication précédente, **caractérisé en ce que** la zone (46) de déformation est une zone d'amorce de rupture qui est destinée à permettre la rupture du bras (44) à sa jonction avec le corps (38) à partir de l'encoche (48).

7. Véhicule automobile selon la revendication précédente, **caractérisé en ce que** la zone (46) de déformation est une zone de pliage qui est destinée à permettre un repli plastique du bras (44) sensiblement en rotation autour d'un axe transversal passant par le centre de l'encoche (48).

8. Véhicule automobile selon l'une des revendications 3 à 7, **caractérisé en ce que** l'élément (22) vertical de l'élément (18) de structure de caisse comporte une équerre (50) de butée, qui fait saillie à partir de sa face (41) verticale, et qui est agencée au dessus d'une extrémité (52) d'appui du bras (44), pour permettre une reprise des efforts exercés par le bras (44) sur l'élément (22) vertical afin de favoriser sa déformation.

9. Véhicule automobile selon l'une quelconque des revendications précédentes, **caractérisé en ce que** le point (36) de fixation destructible est constitué d'un pion fusible sensiblement vertical qui traverse la plaque (40) du déflecteur (34) et qui est reçu dans la traverse (24).

## Claims

1. Motor vehicle comprising an end portion (10) comprising a vehicle body shell structure element (18), and a bumper shield (12) one bottom end (16) of which is attached to the body shell structure element (18), **characterized in that** the body shell structure element (18) comprises at least one substantially vertical element (22) beneath which is attached at least one substantially transverse and horizontal cross member (24), and **in that** the bottom end (16) of the shield (12) comprises, for its attachment to the body shell structure element (18), a deflector (34) that is attached at least beneath the cross member (24) by means of a destructible attachment point (36) that is capable of breaking for a determined value of a force of impact.

2. Motor vehicle according to the preceding claim, **characterized in that** the deflector (34) comprises at least one transverse body (38), that is joined to a plate (40), designed to receive the destructible attachment point (36), by means of an inclined surface (42) that is designed, in the event of impact, to slide beneath the cross member (24) to allow the destructible attachment point (36) to break.

3. Motor vehicle according to the preceding claim, **characterized in that** the deflector (34) rests on a vertical face (41) of the vertical element (22) by means of at least one inclined support arm (44) that comprises a deformation zone (46).

4. Motor vehicle according to the preceding claim, **characterized in that** the deformation zone (46) of the arm (44) is arranged substantially close to the junction of the body (38) and the arm (44).

5. Motor vehicle according to the preceding claim, **characterized in that** the deformation zone (46) comprises, at the junction of the body (38) and the arm (44), a substantially horizontal recess (48) turned towards the vertical element (22), which is designed to cause the beginning of the deformation in the vicinity of the said recess (48).

6. Motor vehicle according to the preceding claim, **characterized in that** the deformation zone (46) is a breakage initiation zone that is designed to allow the breakage of the arm (44) at its junction with the body (34) from the recess (48).

7. Motor vehicle according to the preceding claim, **characterized in that** the deformation zone (46) is a crumple zone that is designed to allow a plastic folding of the arm (44) substantially in rotation about a transverse axis passing through the centre of the recess (48).

8. Motor vehicle according to one of Claims 3 to 7, **characterized in that** the vertical element (22) of the body shell structure element (18) comprises an abutment bracket (50) which protrudes from its vertical face (41) and which is arranged above a bearing end (52) of the arm (44) in order to allow an acceptance of the forces exerted by the arm (44) on the vertical element (22) in order to help with its deformation.

9. Motor vehicle according to any one of the preceding claims, **characterized in that** the destructible attachment point (36) consists of a substantially vertical fusible pin that passes through the plate (40) of the deflector (34) and that is received in the cross member (24).

## Patentansprüche

1. Kraftfahrzeug, das einen Endabschnitt (10), der ein Karosseriestrukturelement (18) des Fahrzeugs enthält, und einen Stoßfänger (12), wovon ein unteres Ende (16) an dem Karosseriestrukturelement (18) befestigt ist, enthält, **dadurch gekennzeichnet, dass** das Karosseriestrukturelement (18) wenigstens ein im Wesentlichen vertikales Element (22) aufweist, unter dem wenigstens ein im Wesentlichen transversaler und horizontaler Querträger (24) befestigt ist, und dass das untere Ende (16) des Stoßfängers (12) für seine Befestigung an dem Karosseriestrukturelement (18) eine Ablenkeinrichtung (34) aufweist, die mittels eines zerstörbaren Befestigungspunkts (36), der bei einem bestimmten Wert einer Stoßkraft zerbrechen kann, zumindest unter dem Querträger (24) befestigt ist.

2. Kraftfahrzeug nach dem vorhergehenden Anspruch, **dadurch gekennzeichnet, dass** die Ablenkeinrichtung (34) wenigstens einen transversalen Körper (38) aufweist, der mit einer Platte (40) vereinigt ist, die dazu bestimmt ist, den zerstörbaren Befestigungspunkt über eine geneigte Oberfläche (42) aufzunehmen, die dazu bestimmt ist, im Fall eines Stoßes unter den Querträger (24) zu gleiten, um das Zerbrechen des zerstörbaren Befestigungspunkts (36) zu ermöglichen.

3. Kraftfahrzeug nach dem vorhergehenden Anspruch, **dadurch gekennzeichnet, dass** die Ablenkeinrichtung (34) auf einer vertikalen Fläche (41) des vertikalen Elements (22) mittels wenigstens eines geneigten Abschnittsarms (44) aufliegt, der eine Verformungszone (46) aufweist.

4. Kraftfahrzeug nach dem vorhergehenden Anspruch, **dadurch gekennzeichnet, dass** die Verformungszone (46) des Arms (44) im Wesentlichen in der Nähe der Verbindungsstelle zwischen dem Körper (38) und dem Arm (44) angeordnet ist.

5. Kraftfahrzeug nach dem vorhergehenden Anspruch, **dadurch gekennzeichnet, dass** die Verformungszone (46) an der Verbindungsstelle zwischen dem Körper (38) und dem Arm (44) eine Nut (48) aufweist, die im Wesentlichen horizontal ist und zu dem vertikalen Element (22) gewendet ist und dazu vorgesehen ist, den Beginn der Verformung in der Nähe der Nut (48) hervorzurufen.

6. Kraftfahrzeug nach dem vorhergehenden Anspruch, **dadurch gekennzeichnet, dass** die Verformungszone (46) eine Bruchauslösezone ist, die dazu vorgesehen ist, das Brechen des Arms (44) an seiner Verbindung mit dem Körper (38) ausgehend von der Nut (48) zu ermöglichen.

7. Kraftfahrzeug nach dem vorhergehenden Anspruch, **dadurch gekennzeichnet, dass** die Verformungszone (46) eine Biegezone ist, die dazu vorgesehen ist, ein plastisches Umbiegen des Arms (44) im Wesentlichen rotatorisch um eine transversale Achse, die durch die Mitte der Nut (48) verläuft, zu ermöglichen.

8. Kraftfahrzeug nach einem der Ansprüche 3 bis 7, **dadurch gekennzeichnet, dass** das vertikale Element (22) des Karosseriestrukturelements (18) einen Anschlagwinkel (50) aufweist, der von seiner vertikalen Fläche (41) vorsteht und der über einem Abstützende (52) des Arms (44) angeordnet ist, um eine Aufnahme der Kräfte, die von dem Arm (44) auf das vertikale Element (22) ausgeübt werden, zu ermöglichen, um dessen Verformung zu begünstigen.

9. Kraftfahrzeug nach einem der vorhergehenden Ansprüche, **dadurch gekennzeichnet, dass** der zerstörbare Befestigungspunkt (36) aus einem im Wesentlichen vertikalen schmelzbaren Höcker gebildet ist, der durch die Platte (40) der Ablenkeinrichtung (34) verläuft und in dem Querträger (24) aufgenommen ist.
